# EUROPEAN PATENT APPLICATION

(11) **EP 4 481 842 A1**
(43) Date of publication of application: **25.12.2024**
(21) Application number: 23807914.9
(22) Date of filing: 18.05.2023
(51) Int. Cl.: H01M 4/04, B65H 27/00

(54) **GUIDE ROLL AND ELECTRODE COATING DEVICE COMPRISING SAME**

(30) Priority: 20.05.2022 KR 20220061727
(71) Applicant: LG Energy Solution, Ltd., Seoul 07335 (KR)
(72) Inventor: LEE, Doo Hyun, Daejeon 34122 (KR); JANG, Yeong Cheol, Daejeon 34122 (KR); KIM, Tae Yeon, Daejeon 34122 (KR); CHOI, Min Woo, Daejeon 34122 (KR); SON, Jae Huoung, Daejeon 34122 (KR); AHN, Chang Bum, Daejeon 34122 (KR)
(74) Representative: Plasseraud IP
(86) International application number: PCT/KR2023/006719
(87) International publication number: WO 2023/224395

(57) **Abstract**

The present invention relates to a guide roll and an electrode coating device comprising the same. The electrode coating device according to one example of the present invention comprises a front surface coating part, which is provided on a traveling path of a current collector, for coating a slurry on the front surface of the current collector, a back surface coating part, which is provided on the traveling path, for coating the slurry on the back surface of the current collector passing through the front surface coating part, and a guide roll including a core part having a rotating shaft, and a surface part surrounding the core part and formed of a material different from that of the core part, and transferring the current collector in a state where the back surface of the current collector faces the back surface coating part.

## Description

### Technical Field

The present invention relates to a guide roll and an electrode coating device comprising the same, and relates to a guide roll capable of preventing thermal deformation due to residual heat of a current collector by being formed of heterogeneous materials with different thermal conductivities, and an electrode coating device comprising the same.

This application claims the benefit of priority based on Korean Patent Application No. 10-2022-0061727 dated May 20, 2022, the disclosure of which is incorporated herein by reference in its entirety.

### Background Art

A lithium secondary battery has a structure that an electrolyte containing a lithium salt is impregnated in an electrode assembly in which a separator is interposed between positive electrode and negative electrodes that active materials are applied on current collectors.

The current collector (or also referred to as `electrode base material') is a thin metal plate supporting the electrode, where typically, the negative electrode uses a copper foil as the current collector and the positive electrode uses an aluminum foil as the current collector.

In order to manufacture an electrode of a secondary battery, an electrode may be formed by dispersing an active material, a conductive material, and a binder in a solvent to prepare a slurry, and then applying the slurry to an electrode current collector, followed by drying the applied slurry.

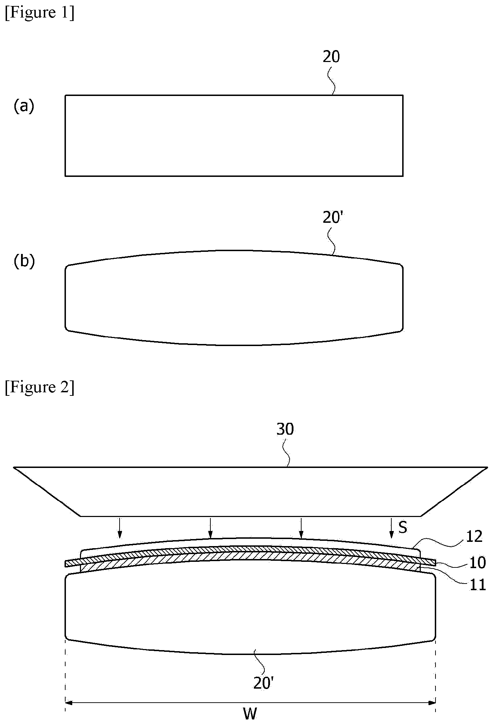

Figure 1(a) is a schematic diagram showing a roll (20) before thermal deformation, Figure 1(b) is a schematic diagram showing the roll (20') subjected to thermal deformation, and Figure 2 is a schematic diagram for explaining a process in which a slurry is applied when a current collector is transferred through the roll shown in Figure 1(b).

The current collector is transferred in a roll-to-roll manner, where an electrode sheet may be manufactured by performing front surface coating and back surface coating on the current collector (10). The current collector (10) is transferred by a plurality of rolls (20) during the slurry coating and drying processes.

Referring to Figures 1 and 2, upon front surface coating of the current collector (10), the slurry applied to the front surface of the current collector (10) is dried to form a front surface coating layer (11). However, residual heat exists in the current collector (10) due to heat provided in the process of drying the slurry applied to the front surface of the current collector.

At this time, as shown in Figure 1(b), the roll (20') transferring the current collector (10) may be thermally deformed due to the residual heat of the current collector (10).

Due to the residual heat of the current collector (10), the roll (20') is heated, and the higher the transfer speed of the current collector (10), the higher the temperature of the roll (20). In particular, the temperature of the central portion of the roll (20') is higher than the temperature of both edges.

In addition, when the transfer of the current collector (10) in which residual heat is present is guided for a long time, as shown in Figure 1(b), the central portion of the roll (20') is thermally deformed convexly.

Referring to Figure 2, when the roll (20') is thermally deformed, the current collector (10) transferred along the thermally deformed roll (20') also corresponds to the shape of the thermally deformed roll (20'), and the central portion of the current collector (10) in the width direction (W) of the current collector (10) protrudes convexly toward a back surface die coater (30).

In this structure, upon back surface coating of the current collector (10), the thickness of the slurry (S) applied from the back surface die coater (30) is not uniform along the width direction (w) of the current collector (10), and as a result, defects in the back surface coating layer (12) occur.

### Disclosure

### Technical Problem

The present invention is intended to provide a guide roll capable of preventing thermal deformation due to residual heat of a current collector by being subjected to surface treatment with a ceramic material, and an electrode coating device comprising the same.

Also, the present invention is intended to provide a guide roll capable of increasing durability and preventing thermal deformation, when guiding the traveling of a current collector, by forming a core part and a surface part with heterogeneous materials, and an electrode coating device comprising the same.

In addition, the present invention is intended to provide a guide roll that after a front surface coating process of a current collector, a back surface coating layer with a uniform thickness can be formed on the back surface of the current collector by guiding the current collector to a back surface coating process through the guide roll without thermal deformation due to residual heat of the current collector, and an electrode coating device comprising the same.

### Technical Solution

In order to solve the above-described technical problems, the electrode coating device according to one example of the present invention comprises a front surface coating part, which is provided on a traveling path of a current collector, for coating a slurry on the front surface of the current collector, a back surface coating part, which is provided on the traveling path, for coating the slurry on the back surface of the current collector passing through the front surface coating part, and a guide roll including a core part having a rotating shaft, and a surface part surrounding the core part and formed of a material different from that of the core part, and transferring the current collector in a state where the back surface of the current collector faces the back surface coating part.

Also, the surface part may be formed of a material having a thermal conductivity lower than the thermal conductivity of the core part. That is, the core part and the surface part may be formed of heterogeneous materials.

In addition, the guide roll may be provided to transfer the current collector in a state where the surface part faces the front surface of the current collector. That is, the guide roll may be provided to transfer the current collector in a state where the surface part is in contact with the front surface coating layer of the current collector.

Furthermore, the surface part may be formed of a ceramic material. Various types may be used as the ceramic material, and for example, the surface part may comprise one or more of alumina and TiO2.

Also, the core part may be formed of a metal material, for example, stainless steel.

In addition, the surface part may be formed by coating the ceramic material on the surface of the core part.

Furthermore, the front surface coating part may comprise a first application part disposed on the traveling path and applying the slurry to the front surface of the current collector, and a first drying part for drying the slurry applied to the front surface of the current collector. As one example, the first drying part may be provided to supply hot air to the current collector.

Also, the back surface coating part may comprise a second application part disposed on the traveling path and applying the slurry to the back surface of the current collector, and a second drying part for drying the slurry applied to the back surface of the current collector. As one example, the second drying part may be provided to supply hot air to the current collector.

In addition, the second application part may be disposed to face the guide roll, and the second application part may be provided to apply the slurry to the back surface of the current collector when the current collector passes through the guide roll.

Furthermore, the guide roll related to one example of the present invention comprises a core part having a rotating shaft, and a surface part surrounding the core part and having a thermal conductivity different from that of the core part.

Also, the surface part may be formed of a material having a thermal conductivity lower than the thermal conductivity of the core part.

In addition, the surface part may be formed of a ceramic material, and for example, the surface part may comprise one or more of alumina and TiO2.

Furthermore, the surface part may be formed by coating the ceramic material on the surface of the core part.

### Advantageous Effects

As described above, the guide roll related to at least one example of the present invention, and the electrode coating device comprising the same have the following effects.

As the guide roll is subjected to surface treatment with a material having a low thermal conductivity, the thermal deformation due to residual heat generated upon front surface coating of the current collector can be prevented.

Also, by guiding the current collector to the back surface coating process through the guide roll, it is possible to prevent a phenomenon that the edges of the current collector sag upon the back surface coating, and it is possible to apply the slurry uniformly along the width direction of the current collector in the back surface coating process.

In addition, as the surface part of the guide roll is surface-treated with a ceramic material, it is possible to reduce the transition of fine electrode foreign substances to the guide roll, and it is possible to improve the appearance quality of the electrode sheet.

### Description of Drawings

Figure 1(a) is a schematic diagram showing a roll (20) before thermal deformation, and Figure 1(b) is a schematic diagram showing the roll (20') subjected to thermal deformation.
Figure 2 is a schematic diagram for explaining a process in which a slurry is applied when a current collector is transferred through the roll shown in Figure 1(b).
Figure 3 is a schematic diagram showing an electrode coating device according to one example of the present invention.
Figure 4 schematically illustrates a cross section of a guide roll according to one example of the present invention.
Figure 5 is a diagram for explaining a process of applying a slurry on a current collector passing through a guide roll.

### Mode for Invention

Hereinafter, a guide roll according to one example of the present invention and an electrode coating device comprising the same will be described in detail with reference to the accompanying drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

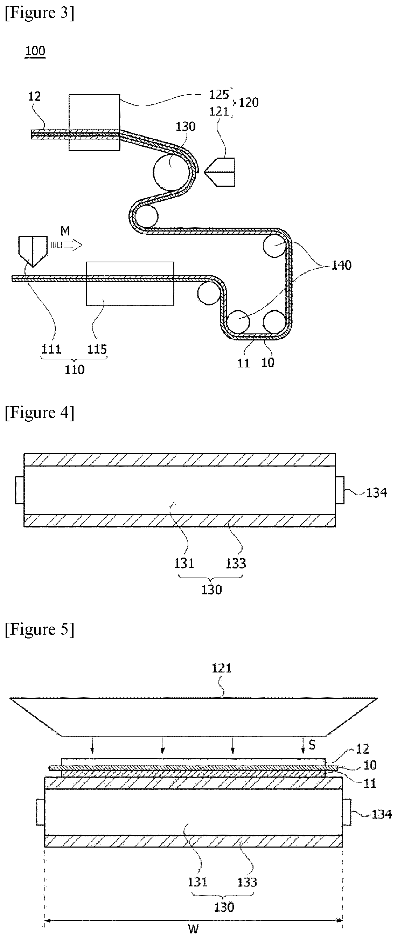

Figure 3 is a schematic diagram showing an electrode coating device according to one example of the present invention, Figure 4 schematically illustrates a cross section of a guide roll according to one example of the present invention, and Figure 5 is a diagram for explaining a process of applying a slurry on a current collector passing through a guide roll.

The electrode coating device (100) according to one example of the present invention comprises a front surface coating part (110), a back surface coating part (120), and a guide roll (130). In addition, the electrode coating device (100) comprises a plurality of transfer rolls (140) for transferring the current collector (10) so that the current collector (10) sequentially passes through the front surface coating part (110) and the back surface coating part (120).

In addition, the electrode coating device (100) comprises a driving part for rotating each of the transfer rolls (140) and the guide roll (130). As one example, the driving part may comprise a motor.

In this document, the current collector (or also referred to as `electrode base material') is a thin metal plate supporting the electrode, wherein typically, in a negative electrode, a copper foil is used as the current collector, and in a positive electrode, an aluminum foil is used as the current collector.

In addition, the term electrode sheet refers to a plate-shaped member in which the front and back surfaces of the current collector (10) are each coated with the slurry (S).

Referring to Figures 3 and 4, the electrode coating device (100) comprise a front surface coating part (110), which is provided on a traveling path (M) of the current collector (10), for coating the slurry on the front surface of the current collector (10), and a back surface coating part (120), which is provided on the traveling path (M), for coating the slurry on the back surface of the current collector (10) passing through the front surface coating part (110).

Also, the electrode coating device (100) comprises a guide roll (130) transferring the current collector (10) in a state where the back surface of the current collector (10) faces the back surface coating part (120).

In addition, the guide roll (30) comprises a core part (131) having a rotating shaft (134), and a surface part (133) surrounding the core part (131) and formed of a material different from that of the core part (131). The rotating shaft (134) is connected to the above-described driving part.

The current collector (10) is transferred from the front surface coating part (110) to the back surface coating part (120) along the traveling path (M). Here, the traveling path (M) is a path along which the current collector (10) is transferred along the plurality of transfer rolls (140).

In the process that the current collector (10) passes through the front surface coating part (110), the slurry is applied to the front surface of the current collector (10), and the front surface coating layer (11) is formed on the front surface of the current collector (10). Thereafter, in the process that the current collector (10) passes through the back surface coating part (120), the slurry (S) is applied to the back surface of the current collector (10), and the back surface coating layer (12) is formed on the back surface of the current collector (10).

The guide roll (130) is provided to transfer the current collector (10) in a state where the back surface of the current collector (10) faces the back surface coating part (120).

That is, since the current collector (10) passing through the guide roll (130) is in a state of having passed through the front surface coating part (110), residual heat remains in the current collector (10) upon passing through the guide roll (130). Therefore, the guide roll (130) should not be thermally deformed even with the residual heat of the current collector (10).

Referring to Figure 4, the surface part (133) of the guide roll (130) may be formed of a material having a thermal conductivity lower than the thermal conductivity of the core part (131). That is, the core part (131) and the surface part (134) may be formed of heterogeneous materials.

Also, the guide roll (130) may be provided to transfer the current collector (10) in a state where the surface part (133) faces the front surface of the current collector (10). That is, the guide roll (130) may be provided to transfer the current collector (10) in a state where the surface part (133) is in contact with the front surface coating layer (10) of the current collector (10).

In addition, the surface part (133) may be formed of a ceramic material. Various types may be used as the ceramic material, and for example, the surface part (133) may comprise one or more of alumina and TiO2.

Furthermore, the core part (131) may be formed of a metal material, and for example, may be formed of stainless steel. In this way, by forming the guide roll (130) with the heterogeneous materials, it is possible to prevent thermal deformation while increasing durability, upon guiding the traveling of the current collector (10).

Also, the surface part (133) may be formed by coating the ceramic material on the surface of the core part (131).

In addition, the front surface coating part (110) may comprise a first application part (111) disposed on the traveling path (M) and applying the slurry to the front surface of the current collector (10), and a first drying part (115) for drying the slurry applied to the front surface of the current collector (10).

Furthermore, the back surface coating part (120) may comprise a second application part (121) disposed on the traveling path (M) and applying the slurry (S) to the back surface of the current collector (10), and a second drying part (125) for drying the slurry applied to the back surface of the current collector (10).

Referring to Figures 3 and 5, the guide roll (130) is installed to face the second application part (121). The guide roll (130) guides the transfer of the current collector (10) while being rotated. That is, the guide roll (130) forms the traveling path of the current collector (10) together with the plurality of transfer rolls (140).

In addition, the guide roll (130) guides the transfer of the current collector (10) so that the back surface of the current collector (10) faces the back surface coating part (120).

When the second application part (121) applies the slurry (S), the guide roll (130) supports the current collector (10) in the width direction of the current collector (10). Specifically, the guide roll (130) is installed to face the second application part (121) with the current collector (10) interposed therebetween, thereby guiding the transfer of the current collector (10) so that the slurry (S) applied by the second application part (121) is uniformly applied in the width direction of the current collector (10).

Referring to Figure 4, the guide roll (130) comprises a core part (131) and a surface part (133).

The core part (131) may have a circular column shape with a circular cross section. In addition, the core part (131) has a length greater than the width (w) of the current collector (10). The core part (131) is rotatably installed on the traveling path (M), thereby guiding the transfer of the current collector (10) along the traveling path.

The surface part (133) is provided to surround the core part (131). The surface part (133) has a thermal conductivity different from that of the core part (131).

The surface part (133) is formed by being subjected to surface treatment on the core part (131) with a material having a thermal conductivity lower than the thermal conductivity of the core part (131). As one example, the surface part (133) has a ceramic material.

In this structure, since the thermal conductivity of the surface part (133) of the guide roll (130) is lower than the thermal conductivity of the core part (131), it is possible to prevent thermal deformation due to residual heat of the current collector (10) passing through the front surface coating process.

In addition, as the guide roll (130) without thermal deformation due to the residual heat of the current collector (10) guides the current collector (10) to the back surface coating process, it is possible to prevent a phenomenon that the current collector (10) sags to both edges of the guide roll (130) based on the center of the guide roll (130).

Referring to Figure 5, when the slurry (S) is applied by the second application part (121), the slurry (S) may be uniformly applied to the back surface of the current collector (10) along the width direction of the current collector (10).

In addition, the front surface coating part (110) applies the slurry (S) to the front surface of the current collector (10) and dries it to perform the front surface coating process on the front surface of the current collector (10). The front surface coating part (110) comprises a first application part (111) and a first drying part (115).

The front surface coating process proceeds while the current collector (10) sequentially passes through the first application part (111) and the first drying part (115) along the traveling path (M).

The first application part (111) is installed on the traveling path (M) of the current collector (10) and applies the slurry to the front surface of the current collector (10). The current collector (10) to which the slurry is applied to the front surface enters the first drying part (115).

Here, the slurry is a mixture in which an active material, a binder, a conductive material, and a solvent are mixed. Also, the active material may be a positive electrode active material or a negative electrode active material. The binder may be a polymer additive for structural stabilization of the electrode, and the conductive material may be a carbon-based additive for improving the conductivity.

The first drying part (115) is installed on the exit side of the first application part (111). The first drying part (115) may provide hot air to the current collector (10) according to a preset temperature condition. The current collector (10) is heated and dried while passing through the first drying part (115).

In the drying process of the first drying part (115), while moisture is dried in the slurry applied to the front surface of the current collector (10), the components contained in the slurry (S) are coated on the front surface of the current collector (10) to form a front surface coating layer (11). The front surface coating layer (11) refers to a coating layer provided on the front surface of the current collector (10).

After the front surface coating process, the current collector (10) is transferred along the plurality of transfer rolls (140) and the guide roll (130) to enter the back surface coating part (120).

The back surface coating part (120) applies the slurry (S) to the back surface of the current collector (10) and dries it to perform the back surface coating process on the back surface of the current collector (10). The back surface coating part (120) comprises a second application part (121) and a second drying part (125).

The back surface coating process proceeds while the current collector (10) sequentially passes through the second application part (121) and the second drying part (125) along the traveling path (M).

The second application part (121) is installed to face the guide roll (130) with the current collector (10) interposed therebetween in the traveling path (M) of the current collector (10). The second application part (121) applies the slurry (S) to the back surface of the current collector (10).

The second application part (121) applies the slurry (S) to the back surface of the current collector along the width direction of the current collector (10) in the process that the current collector (10) passes through the guide roll (130). The second application part (121) is different from the first application part (111) only in the installation position, and the type of the slurry (S) applied to the current collector (10) and the application method may be the same.

The second drying part (125) is installed on the traveling path in the direction toward the exit side of the second application part (121). The second drying part (125) provides hot air to the current collector (10). The current collector (10) is heated and dried while passing through the second drying part (125).

In the drying process of the second drying part (125), while moisture is dried in the slurry (S) applied to the back surface of the current collector, the components contained in the slurry (S) are coated on the back surface of the current collector (10) to form a back surface coating layer (12). The back surface coating layer (12) refers to a coating layer on the back surface of the current collector (10).

One example of the present invention as described above has been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

According to the guide roll related to at least one example of the present invention, and the electrode coating device comprising the same, the guide roll is subjected to surface treatment with a material having a low thermal conductivity, so that it is possible to prevent thermal deformation due to residual heat generated when the front surface of the current collector is coated.

## Claims

1. An electrode coating device comprising:
a front surface coating part, which is provided on a traveling path of a current collector, for coating a slurry on the front surface of the current collector;
a back surface coating part, which is provided on the traveling path, for coating the slurry on the back surface of the current collector passing through the front surface coating part; and
a guide roll including a core part having a rotating shaft, and a surface part surrounding the core part and formed of a material different from that of the core part, and transferring the current collector in a state where the back surface of the current collector faces the back surface coating part.

2. The electrode coating device according to claim 1, wherein
the surface part is formed of a material having a thermal conductivity lower than the thermal conductivity of the core part.

3. The electrode coating device according to claim 2, wherein
the guide roll transfers the current collector in a state where the surface part faces the front surface of the current collector.

4. The electrode coating device according to claim 2, wherein
the surface part is formed of a ceramic material.

5. The electrode coating device according to claim 2, wherein
the core part is formed of a metal material.

6. The electrode coating device according to claim 4, wherein
the surface part is formed by coating the ceramic material on the surface of the core part.

7. The electrode coating device according to claim 2, wherein
the surface part comprises one or more of alumina and TiO2.

8. The electrode coating device according to claim 1, wherein
the front surface coating part comprises: a first application part disposed on the traveling path and applying the slurry to the front surface of the current collector; and
a first drying part for drying the slurry applied to the front surface of the current collector.

9. The electrode coating device according to claim 1, wherein
the back surface coating part comprises: a second application part disposed on the traveling path and applying the slurry to the back surface of the current collector; and
a second drying part for drying the slurry applied to the back surface of the current collector.

10. The electrode coating device according to claim 9, wherein
the second application part is disposed to face the guide roll, and
the second application part is provided to apply the slurry to the back surface of the current collector when the current collector passes through the guide roll.

11. A guide roll comprising:
a core part having a rotating shaft; and
a surface part surrounding the core part and having a thermal conductivity different from that of the core part.

12. The guide roll according to claim 11, wherein
the surface part is formed of a material having a thermal conductivity lower than the thermal conductivity of the core part.

13. The guide roll according to claim 11, wherein
the surface part is formed of a ceramic material.

14. The guide roll according to claim 11, wherein
the surface part comprises one or more of alumina and TiO2.

15. The guide roll according to claim 11, wherein
the surface part is formed by coating the ceramic material on the surface of the core part.
